# EUROPEAN PATENT SPECIFICATION

(11) **EP 0 653 832 B1**
(45) Date of publication and mention of the grant of the patent: **09.12.1998**
(21) Application number: 94308465.7
(22) Date of filing: 16.11.1994
(51) Int. Cl.: H02P 5/402

(54) **Method for controlling speed of a washing machine motor**
Verfahren zum Regeln der Drehzahl eines Waschmaschinenmotors
Procédé pour commander la vitesse du moteur d'une machine à laver

(30) Priority: 16.11.1993 KR 9324065; 20.01.1994 KR 9401068; 29.03.1994 KR 9406365; 16.05.1994 KR 9410678; 17.05.1994 KR 9410853
(43) Date of publication of application: 17.05.1995
(60) Divisional application: 95202298.6
(73) Proprietor: LG ELECTRONICS INC., Seoul (KR)
(72) Inventor: Cheong, Dal Ho, Mapo-Ku, Seoul (KR); Sang, Doo Whan, Socho-ku, Seoul (KR)
(74) Representative: Cross, Rupert Edward Blount

(56) References cited:
- EP-A- 0 489 970
- EP-A- 0 560 186

## Description

### FIELD OF THE INVENTION

This invention relates to method for controlling speed of a washing machine motor, more particularly to methods and devices for controlling speed of a washing machine motor by varying number of revolutions and changing direction of rotation of the motor through controlling phase of the motor.

### BACKGROUND OF THE INVENTION

A conventional device for controlling speed of a washing machine motor is to be explained hereinafter, referring to a Low Noise Type(G-Series) motor taken from Matsushita catalogue.

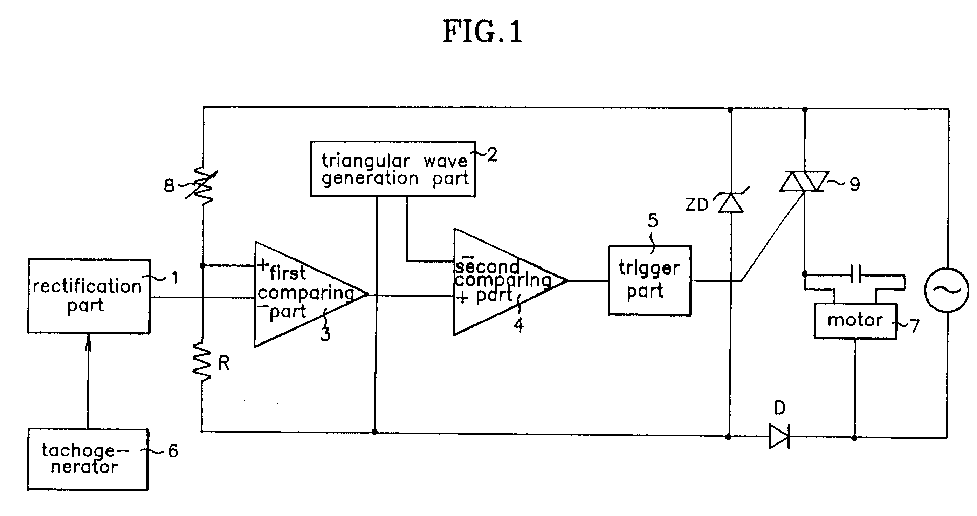

As shown in FIG.1, a conventional device for controlling speed of a washing machine motor includes a tachogenerator 6 for detecting number of revolutions of a washing machine motor 7, a rectification circuit part 1 for converting signals received from the tachogenerator 7 into direct current by rectifying and smoothing the signals, a variable resistor 8 for setting speed of rotation, a first comparing part 3 for comparing signals from the rectification circuit part 1 with signals varied by the variable resistor 8, a triangular wave generation part 2 for generating triangular pulse signals, a second comparing part 4 for comparing the triangular pulse signals received from the triangular wave generation part 2 with the signals received from the first comparing part 3, a trigger part 5 for triggering the signals received from the second comparing part 4 to control operation of the washing machine motor 7, and a triac 9 for turning on/off a driving power to the washing machine motor in response to the control signal of the trigger part 5.

Operation of the foregoing conventional device for controlling speed of a washing machine motor is to be explained hereinafter.

The tachosignal generated at the tachogenerator 6 in sine wave voltage proportional to the number of revolutions of the washing machine motor 7 is applied to the rectification circuit part 1, and rectified into direct current voltage therein. The direct current voltage from the rectification circuit part 1 is applied to the first comparing part 3 to compare with a voltage generated by the variable resistor 8 used for setting speed of rotation, and then applied to the second comparing part 2 to compare with the triangular pulse generated at the triangular wave generation part 2. The signal applied from the second comparing part 4 to the triace 9 through the trigger part 5 triggering a gate of the triac 9 controls phase of an alternative current varying input power to the washing machine motor 7, thereby controls speed of the working machine motor 7.

However, the conventional device for controlling the speed of a washing machine motor has had problems of complicate and unstable control because, for reversing the motor 7, the motor 7 should be stopped to change over a switch provided outside of the motor 7 for changing winding of the motor 7 due to no built in means for reversing the motor 7 has been provided, and the motor 7 has exhibited great variation in number of revolutions due to low preciseness of the sine wave signal coming from conversion of the sine wave signal applied from the tachogenerator 6 to the rectification part 1 for detecting number of revolutions of the motor 7 into direct current voltage therein.
EP-A-489 970 discloses a method and device for the operation of a multi-phase motor, the coil windings of which are triggered via Triacs in a predetermined triggering sequence.

### THE SUMMARY OF AN INVENTION

The object of this invention is to provide methods for controlling speed of a washing machine motor which enables to control water current of a washing machine at will by controlling direction of rotation and number of revolutions of the washing machine motor through controlling the phase of the input voltage applied to the washing machine motor.

These and other objects and features of this invention can be achieved by providing a method for controlling speed of a washing machine motor including steps of actual speed detection for detecting actual speed of a washing machine motor at every half cycle of ordinary use power frequency, speed error detection for detecting speed error by comparing the detected actual speed with ordered speed, speed condition determination for determining either a normal condition, an underspeed condition or an overspeed condition using the detected speed error, proportional integration compensation value calculation for calculating a proportional integration value according to the determined speed condition, angular value scaling for scaling the calculated proportional compensation value into a angular value, and washing machine motor speed control for controlling speed of a washing machine motor using the scaled angular value.

### BRIEF DESCRIPTION OF THE DRAWINGS

FIG.1 is a conventional device for controlling speed of a washing machine motor.

FIG.2 is a hardware a method for controlling speed of a washing machine motor in accordance with this invention can be applied thereto.

FIG.3 is a flow chart of a method for controlling speed of a washing machine motor in accordance with this invention.

FIG.4 is a detailed flow chart of the step for detecting actual speed of a washing motor shown in FIG.3.

FIG.5 is a detailed flow chart of the steps for the proportional integration compensation value calculation and the angular value calculation shown in FIG.3.

### DETAILED DESCRIPTION OF THE INVENTION

Methods for controlling speed of a washing machine motor in accordance with this invention is to be explained hereinafter, referring to the attached drawings.

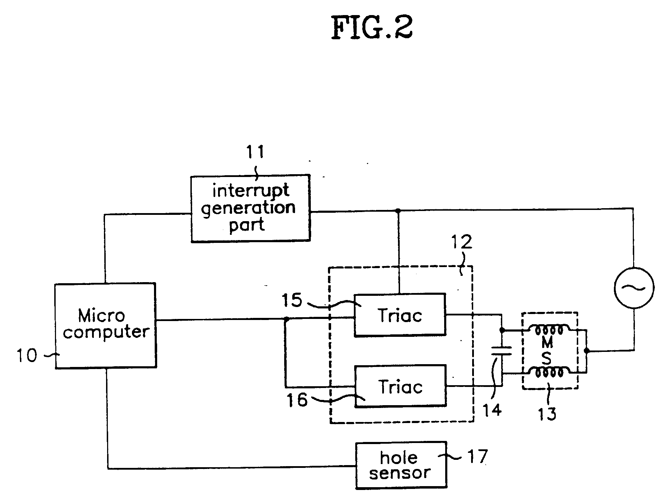

As shown in FIG.2, a hardware used for application of a method for controlling speed of a washing machine motor in accordance with this invention includes a hole sensor 17 for detecting rotating frequency of a single phase washing machine motor 13, converting the detected rotating frequency into rectangular pulses, and transmitting the rectangular pulses, an interrupt generation part 11 for detecting cycles of ordinary use power frequency and generating an interrupt signal at every half cycle according to the detected cycle, a microcomputer 10 for calculating speed error a deviation from an ordered speed based on signals received both from the interrupt generation part 11 and the hole sensor 17 and controlling speed of the washing machine motor 13 by generating and applying an error compensation value based on the calculation of the speed error, a triac circuit part 12 having two triacs 15 and 16 for controlling speed of the washing machine motor 13 under the control of the microcomputer 10, and a condenser 14 for converting alternating magnetic fields applied to the washing machine motor 13 into rotating magnetic fields.

Operation of the foregoing hardware used for application of the method for controlling speed of the washing machine motor is to be explained hereinafter.

When the triac 15 is turned on in response to the order speed received from the microcomputer 10, current starts to flow through a main coil M of the washing machine motor 13 and subsequently, lagging current starts to flow through the subcoil S of the washing machine motor 13, resulting to convert the alternating field in the washing machine motor 13 into rotating field, which makes the washing machine motor 13 rotate. When the motor 13 rotates, the hole sensor 17 detects number of revolutions of the washing machine motor 13 and applies the detected number of revolutions to the microcomputer 10 in rectangular pulses.

And from the moment when power is fed to the washing machine motor 13, the interrupt generation part 11 detects cycle(16.6 ms) of the ordinary power frequency(AC;60Hz) and generates interrupt signals at every half cycle(8.3ms) of the detected ordinary power frequency.

Every time the interrupt signal is generated, the microcomputer 10 detects a falling edge of the rectangular pulse received from the hole sensor 17 and calculates actual speed of the washing machine motor 13 by calculating a period of time from a first falling edge to the next falling edge, i.e., a cycle based on the detected falling edges.

Actual speed(Wrm*) of a washing machine motor can be detected by carrying out the foregoing process repeatedly.

By detecting a speed error, deviation from the ordered speed, according to the detected actual speed(Wrm*) of the washing machine motor 13, speed of the washing machine motor 13 can be controlled.

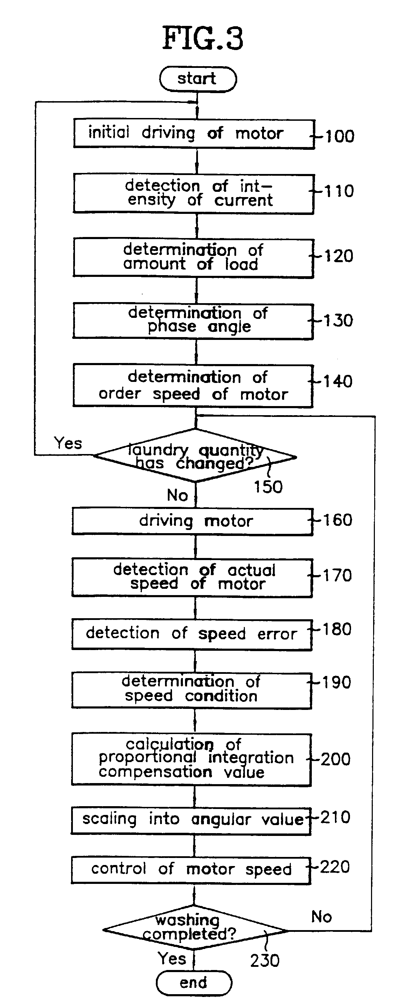

The method for controlling speed of a washing machine motor in accordance with this invention applicable to the foregoing hardware is to be explained in detail hereinafter, referring to FIGs.3, 4 and 5.

First, an order speed determination and driving step of the washing machine motor is carried out for determining the order speed for the washing machine motor based on the quantity of laundry, and driving the washing machine motor based on the determined order speed.

The a order speed determination and driving step of the washing machine motor includes steps of order speed determination of a washing machine motor(100, 110, 120, 130, and 140) for determining the order speed of the washing machine motor according to the quantity of laundry, a laundry quantity change detection(150) for detecting change of laundry quantity, a laundry quantity change reflection for determining the order speed of the washing machine motor again according to the change of laundry quantity by carrying out the speed determination step of the washing machine motor again in case the laundry quantity found changed as the result of the carried out laundry quantity change detection step (150), and a washing machine motor driving (160) for driving the washing machine motor at the order speed of the washing machine motor in case the laundry quantity found not changed as the result of the carried out laundry quantity change detection step(150).

Herein, the order speed determination step of the washing machine motor determines the order speed of the washing machine motor through initial driving(100) of the washing machine motor for a short while for detecting laundry quantity, detecting current intensity(110) flowing through the washing machine motor at carrying out the initial driving step(100) of the washing machine motor, determining amount of load(120) by determining the laundry quantity with a ratio of current intensity at 100% load to the detected current intensity referring to a speed-torque characteristic curve of the washing machine motor, determining phase angle(130) of the washing machine motor by applying phase angle pattern based on the determined amount of load, and determining the order speed (140) of the washing machine motor based on the determined phase angle.

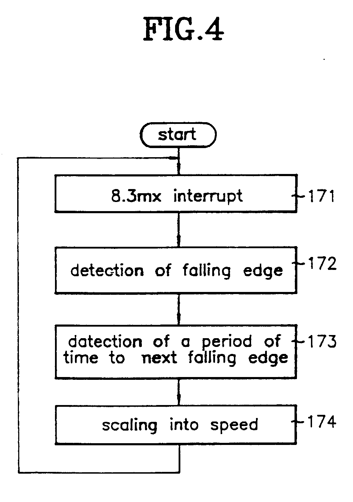

After carrying out the order speed determination and driving step of the washing machine motor, the actual speed detection step(170) for detecting actual speed of the washing machine motor at every half cycle of the ordinary use power frequency is carried out, which is to be explained hereinafter, referring to FIG.4.

The actual speed detection step(170) includes an interrupt input step(171) for receiving interrupts generated corresponding to every half cycle of ordinary use power frequency, a falling edge detection step(172) for detecting falling edges of rectangular pulses corresponding to the rotation of the washing machine motor from the received interrupt, a rectangular pulse cycle detection step(173) for detecting one cycle of the rectangular pulses by detecting a period of time taken from the detected falling edge to the next falling edge, and actual speed detection step(174) for scaling actual speed of the washing machine motor from the detected cycle of rectangular pulse.

Herein, since the cycle of ordinary use power frequency (AC;60Hz) is 16.6ms, the interrupt generates at every 8.3ms.

After carrying out actual speed detection step(170), the speed error detection step(180) is carried out for detecting speed error by comparing the detected actual speed with the order speed, wherein the speed error is deviation of the actual speed from the order speed.

After carrying out the speed error detection step(180), the speed condition determination step(190) is carried out for determining condition of the speed based on the detected speed error, wherein if the speed error is greater than a preset allowance, it is determined to be overspeed, if the speed error is smaller than the allowance, it is determined to be underspeed, and if the speed error is within the allowance, it is determined to be normal.

After carrying out the speed condition determination step(190), the proportional integration compensation value calculation step(200) is carried out for calculating a proportional integration compensation value according to the speed condition.

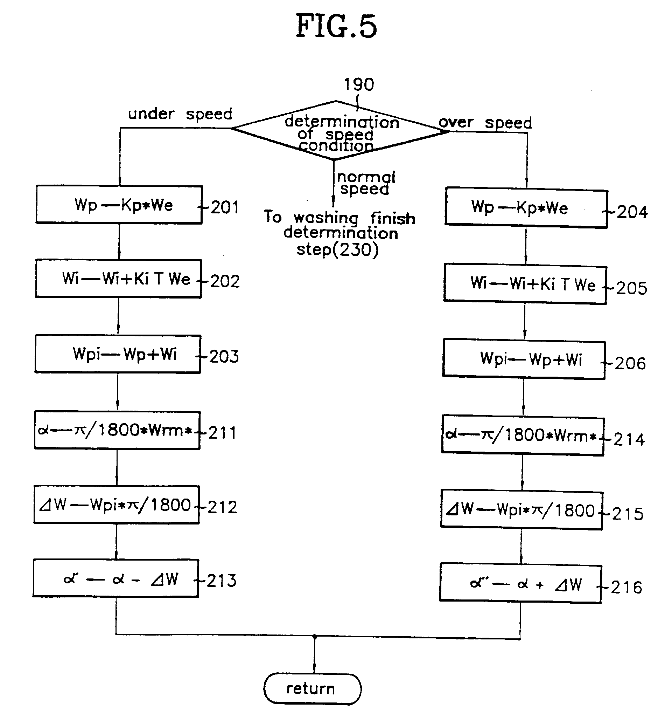

The proportional integration compensation value calculation step(200) includes, as shown in FIG.5, a underspeed proportional integration compensation value calculation step(201, 202 and 203) for calculating underspeed proportional integration compensation value in case it is found to be underspeed as the result of the carried out speed condition determination step(190), and an overspeed proportional integration compensation value calculation step(204, 205 and 206) for calculating overspeed proportional integration compensation value in case it is found to be overspeed as the result of the carried out speed condition determination step(190), which is to be explained hereinafter in detail.

First, the underspeed proportional integration compensation value calculation step includes calculation of a proportional compensation value Wp by multiplying a proportional gain constant Kp and the detected speed error We (201), calculation of an integration compensation value Wi by multiplying an integration gain constant Ki, a loop time T and the speed error We and adding the above multiplied value to an initial integration value Wi (202), and calculation of a proportional integration compensation value Wpi by adding the calculated proportional compensation value Wp to the calculated integration compensation value Wi (203).

And the overspeed proportional integration compensation value calculation step is carried out in a way similar to the underspeed proportional integration compensation value calculation step. That is, the overspeed proportional integration compensation value calculation step includes calculation of a proportional compensation value Wp by multiplying a proportional gain constant Kp and the detected speed error We (204), calculation of an integration compensation value Wi by multiplying an integration gain constant Ki, a loop time T and the speed error We and adding the above multiplied value to an initial integration value Wi (205), and calculation of a proportional integration compensation value Wpi by adding the calculated proportional compensation value Wp to the calculated integration compensation value Wi (206).

Herein, the initial integration value Wi is "0", and the value thereafter is an accumulation therefrom.

After carrying out the proportional integration compensation value calculation step (200), an angular value scaling step (210) is carried out for scaling the calculated proportional integration compensation value into an angular value.

As shown in FIG.5, the angular value scaling step (210) includes underspeed angular value calculation step (211, 212 and 213) for scaling the underspeed proportional integration compensation value into angular value after carrying out the underspeed proportional integration compensation value calculation step, and the overspeed angular value calculation step (214, 215 and 216) for scaling the calculated overspeed proportional integration compensation value into angular value after carrying out the overspeed proportional integration compensation value calculation step (204, 205 and 206), which is explained hereinafter in detail.

First, the underspeed angular value calculation step includes scaling the order speed Wrm* into a first angular value α by multiplying the order speed Wrm* and π/180 (211), scaling the underspeed proportional integration compensation value Wpi into a second angular value ΔW by multiplying the underspeed proportional integration compensation value Wpi and π/180 (212), and calculating a underspeed angular value α' by subtracting the second angular value ΔW from the first angular value α (213).

And the overspeed angular value calculation step includes scaling the order speed Wrm* into a first angular value α by multiplying the order speed Wrm* and π/180 (214), scaling the overspeed proportional integration compensation value Wpi into a second angular value ΔW by multiplying the overspeed proportional integration compensation value Wpi and π/l80 (215), and calculating a overspeed angular value α" by adding the first angular value α and the second angular value ΔW (216).

In this instant, if the underspeed angular value α'is smaller than 0 or greater than π and the overspeed angular value α" is smaller than 0 or greater than π, determining that the speed is normal, process proceeds to a step for determining finishing of washing (230) is carried out, which is to be explained hereinafter.

After carrying out angular value scaling step (210), a speed control step (220) of the washing machine motor is carried out for controlling the speed of the washing machine motor. That is, since the washing machine motor is turned on at angular value "0", and stopped at angular value π after turning 180 degrees, control of the washing machine motor using angular value is possible.

After finishing the speed control step (220) of the washing machine motor, proceeding to a step for determining on finishing of washing, if it is found that the washing has not been completed, proceeding to the laundry quantity change detection step (150), the processes are repeated, and if it is found that the washing has been completed, the washing is finished.

## Claims

1. A method for controlling speed of a washing machine motor comprising steps of:
actual speed detection (170) for detecting actual speed of a washing machine motor at every half cycle of ordinary use power frequency;
speed error detection (180) for detecting speed error by comparing the detected actual speed with ordered speed;
speed condition determination (190) for determining either a normal condition, an underspeed condition or an overspeed condition using the detected speed error;
proportional integration compensation value calculation (200) for calculating a proportional integration value according to the determined speed condition;
angular value scaling (210) for scaling the calculated proportional compensation value into a angular value; and,
washing machine motor speed control (220) for controlling speed of a washing machine motor using the scaled angular value.

2. The method as claimed in claim 1, further including an order speed determination and driving step (100,110,120,130,140,150,160) of the washing machine motor for determining the order speed for the washing machine motor based on the quantity of laundry, and driving the washing machine motor based on the determined order speed.

3. The method as claimed in claim 2,
wherein the order speed determination and driving step of the washing machine motor includes steps of
order speed determination (100,110,120,130,140) of a washing machine motor for determining the order speed of the washing machine motor according to the quantity of laundry,
a laundry quantity change detection (150) for detecting change of laundry quantity,
a laundry quantity change reflection for carrying out the speed determination step (100,110,120,130,140) of the washing machine motor again in case the laundry quantity found changed as the result of the carried out laundry quantity change detection step (150), and
a washing machine motor driving (160) for driving the washing machine motor at the order speed of the washing machine motor in case the laundry quantity found not changed as the result of the carried out laundry quantity change detection step (160).

4. The method as claimed in claim 3,
wherein the order speed determination step of the washing machine motor includes steps of
initial driving (100) of the washing machine motor for a preset short while for detecting laundry quantity,
detecting current intensity (110) flowing through the washing machine motor at carrying out the initial driving step of the washing machine motor,
determining amount of load (120) by determining the laundry quantity with a ratio of current intensity at 100% load to the detected current intensity referring to a speed-torque characteristic curve of the washing machine motor,
determining phase angle (130) of the washing machine motor by applying phase angle pattern based on the determined amount of load, and
determining the order speed (140) of the washing machine motor based on the determined phase angle.

5. The method as claimed in claim 1,
wherein the actual speed detection step (170) includes
an interrupt input step (171) for receiving interrupts generated corresponding to every half cycle of ordinary use power frequency,
a falling edge detection step (172) for detecting falling edges of rectangular pulses corresponding to the rotation of the washing machine motor from the received interrupt,
a rectangular pulse cycle (173) detection step for detecting one cycle of the rectangular pulses by detecting a period of time taken from the detected falling edge to the next falling edge, and
actual speed detection step (174) for scaling actual speed of the washing machine motor from the detected cycle of rectangular pulse.

6. The method as claimed in claim 5,
wherein the interrupt generates at every 8.3ms, periodically.

7. The method as claimed in claim 1,
wherein the speed error is deviation of the actual speed from the ordered speed in the speed error detection step (180).

8. The method as claimed in claim 7,
wherein, in the speed condition determination step (190), if the speed error is greater than a preset allowance, it is determined to be overspeed, if the speed error is smaller than the allowance, it is determined to be underspeed, and if the speed error is within the allowance, it is determined to be normal.

9. The method as claimed in claim 1,
wherein the proportional integration compensation value calculation step (200) includes
a underspeed proportional integration compensation value calculation step (201,202,203)for calculating underspeed proportional integration compensation value in case it is found to be underspeed as the result of the carried out speed condition determination step, and an overspeed proportional integration compensation value calculation step (204, 205, 206) for calculating overspeed proportional integration compensation value in case it is found to be overspeed as the result of the carried out speed condition determination step.

10. The method as claimed in claim 9,
wherein the underspeed proportional integration compensation value calculation step (201,202,203) includes steps for
calculating a proportional compensation value Wp by multiplying a proportional gain constant Kp and the detected speed error We (201),
calculating an integration compensation value Wi by multiplying an integration gain constant Ki, a loop time T and the speed error We and adding the above multiplied value to an initial integration value Wi (202), and
calculating a proportional integration compensation value Wpi by adding the calculated proportional compensation value Wp to the calculated integration compensation value Wi (203).

11. The method as claimed in claim 9,
wherein the overspeed proportional integration compensation value calculation step (204, 205,206) includes steps for
calculating a proportional compensation value Wp by multiplying a proportional gain constant Kp and the detected speed error We (204),
calculating an integration compensation value Wi by multiplying an integration gain constant Ki, a loop time T and the speed error We and adding the above multiplied value to an initial integration value Wi (205), and
calculating a proportional integration compensation value Wpi by adding the calculated proportional compensation value Wp to the calculated integration compensation value Wi (206).

12. The method as claimed in claim 9,
wherein the angular value scaling step (210) includes
a underspeed angular value calculation step (211,212,213) for scaling the underspeed proportional integration compensation value into angular value after carrying out the underspeed proportional integration compensation value calculation step.
an overspeed angular value calculation step (214,215,216) for scaling the calculated overspeed proportional integration compensation value into angular value after carrying out the overspeed proportional integration compensation value calculation step.

13. The method as claimed in claim 12,
wherein the underspeed angular value calculation step (211,212,213) includes steps for
scaling the order speed Wrm* into a first angular value α by multiplying the order speed Wrm* and π/180 (211),
scaling the underspeed proportional integration compensation value Wpi into a second angular value ΔW by multiplying the underspeed proportional integration compensation value Wpi and π/180 (212), and
calculating a underspeed angular value α' by subtracting the second angular value ΔW from the first angular value α (213).

14. The method as claimed in claim 12,wherein the overspeed angular value calculation step (214,215,216) includes steps for
scaling the order speed Wrm* into a first angular value α by multiplying the order speed Wrm* and π/180 (214),
scaling the overspeed proportional integration compensation value Wpi into a second angular value ΔW by multiplying the overspeed proportional integration compensation value Wpi and π/180 (215), and
calculating an overspeed angular value α" by adding the first angular value α and the second angular value ΔW (216).

15. The method as claimed in claim 13,
wherein, if the underspeed angular value α' is smaller than 0 or greater than π, it is determined that the speed is normal.

16. The method as claimed in claim 13,
wherein, if the overspeed angular value α" is smaller than 0 or greater than π, it is determined that the speed is normal.

## Patentansprüche

1. Verfahren zur Steuerung/Regelung der Drehzahl eines Waschmaschinenmotors umfassend die Schritte:
einer Ist-Drehzahlerfassung (170) zur Erfassung einer Ist-Drehzahl eines Waschmaschinenmotors zu jeder halben Periode der üblicherweise verwendeten Betriebsfrequenz;
einer Drehzahlfehlererfassung (180) zur Erfassung eines Drehzahlfehlers durch Vergleichen der erfaßten Ist-Drehzahl mit einer Soll-Drehzahl;
einer Drehzahlzustandsbestimmung (190) zur Bestimmung entweder eines Normalzustands, eines Unterdrehzahlzustands oder eines Überdrehzahlzustands unter Verwendung des erfaßten Drehzahlfehlers;
einer Proportional-Integrations-Kompensationswert-Berechnung (200) zur Berechnung eines Proportional-Integrationswerts gemäß des bestimmten Drehzahlzustands;
einer Winkelwert-Skalierung (210) zur Skalierung des berechneten Proportional-Kompensationswerts in einen Winkelwert; und,
einer Waschmaschinenmotor-Drehzahlsteuerung/regelung (220) zur Steuerung/Regelung der Drehzahl eines Waschmaschinenmotors unter Verwendung des skalierten Winkelwerts.

2. Verfahren nach Anspruch 1, ferner umfassend einen Soll-Drehzahlbestimmungs- und Antriebsschritt (100, 110, 120, 130, 140, 150, 160) des Waschmaschinenmotors zum Bestimmen der Soll-Drehzahl für den Waschmaschinenmotor basierend auf der Wäschemenge und zum Antreiben des Waschmaschinenmotors basierend auf der bestimmten Soll-Drehzahl.

3. Verfahren nach Anspruch 2, wobei der Soll-Drehzahlbestimmungs- und Antriebsschritt des Waschmaschinenmotors die Schritte umfaßt:
Soll-Drehzahlbestimmung (100, 110, 120, 130, 140) eines Waschmaschinenmotors zur Bestimmung der Soll-Drehzahl des Waschmaschinenmotors gemäß der Wäschemenge,
eine Wäschemengeänderungserfassung (150) zur Erfassung einer Änderung der Wäschemenge,
eine Wäschemengeänderungsreflektion zur erneuten Durchführung des Drehzahl-Bestimmungsschritts (100, 110, 120, 130, 140) des Waschmaschinenmotors im Fall, daß sich die Wäschemenge als das Ergebnis des durchgeführten Wäschemengeänderungserfassungsschritts (150) als geändert herausgestellt hat, und
einen Waschmaschinenmotorantrieb (160) zum Antreiben des Waschmaschinenmotors mit der Soll-Drehzahl des Waschmaschinenmotors im Fall, daß sich die Wäschemenge als das Ergebnis des durchgeführten Wäschemengeänderungserfassungsschritts (160) als nicht geändert herausgestellt hat.

4. Verfahren nach Anspruch 3, wobei der Soll-Drehzahl-Bestimmungsschritt des Waschmaschinenmotors die Schritte umfaßt:
Anfangsantrieb (100) des Waschmaschinenmotors für eine vorgegebene kurze Zeitspanne zur Erfassung der Wäschemenge,
Erfassen der Stromstärke (110), die beim Ausführen des Anfangsantriebsschritts des Waschmaschinenmotors durch den Waschmaschinenmotor fließt,
Bestimmung der Lastmenge (120) durch Bestimmung der Wäschemenge mit einem Verhältnis der Stromstärke bei 100% Last zur erfaßten Stromstärke unter Bezugnahme auf eine Drehzahl-Drehmomentcharakteristikkurve des Waschmaschinenmotors,
Bestimmung des Phasenwinkels (130) des Waschmaschinenmotors durch Verwendung eines Phasenwinkelmusters basierend auf der bestimmten Lastmenge, und
Bestimmung der Soll-Drehzahl (140) des Waschmaschinenmotors basierend auf dem bestimmten Phasenwinkel.

5. Verfahren nach Anspruch 1, wobei der Ist-Drehzahlserfassungsschritt (170) umfaßt:
einen Unterbrechungseingabeschritt (171) zum Empfangen von Unterbrechungen, die entsprechend jeder halben Periode der üblicherweise verwendeten Betriebsfrequenz erzeugt werden,
einen abfallende-Flanke-Erfassungsschritt (172) zur Erfassung von abfallenden Flanken von Rechteckimpulsen entsprechend der Drehung des Waschmaschinenmotors von der empfangenen Unterbrechung, einen Rechteckpuls-Periode-Erfassungsschritt (173) zur Erfassung einer Periode der Rechteckimpulse durch Erfassen einer Zeitspanne, die von der erfaßten abfallenden Flanke zur nächsten abfallenden Flanke vergeht, und
einen Ist-Drehzahlerfassungsschritt (174) zur Skalierung der Ist-Drehzahl des Waschmaschinenmotors aus der erfaßten Periode von Rechteckimpulsen.

6. Verfahren nach Anspruch 5, wobei die Unterbrechung periodisch alle 8,3 ms entsteht.

7. Verfahren nach Anspruch 1, wobei der Drehzahlfehler die Abweichung der Ist-Drehzahl von der Soll-Drehzahl in dem Drehzahlfehler-Erfassungsschritt (180) ist.

8. Verfahren nach Anspruch 7, wobei in dem Drehzahlzustand-Bestimmungsschritt (190) bestimmt wird, daß Überdrehzahl vorliegt, wenn der Drehzahlfehler größer als eine vorgegebene zulässige Abweichung ist, daß Unterdrehzahl vorliegt, wenn der Drehzahlfehler kleiner als die zulässige Abweichung ist und als normal bestimmt wird, wenn der Drehzahlfehler in der zulässigen Abweichung liegt.

9. Verfahren nach Anspruch 1, wobei der Proportional-Integrations-Kompensationswert-Berechnungsschritt (200) umfaßt:
einen Unterdrehzahl-Proportional-Integrations-Kompensationswert-Berechnungsschritt (201, 202, 203) zur Berechnung eines Unterdrehzahl-Proportional-Integrations-Kompensationswerts im Fall, daß als Ergebnis des durchgeführten Drehzahlzustand-Bestimmungsschritts Unterdrehzahl festgestellt wird und einen Überdrehzahl-Proportional-Integrations-Kompensationswert-Berechnungsschritt (204, 205, 206) zur Berechnung eines Überdrehzahl-Proportional-Integrations-Kompensationswerts im Fall, daß als Ergebnis des durchgeführten Drehzahlzustand-Bestimmungsschritts Überdrehzahl festgestellt wird.

10. Verfahren nach Anspruch 9, wobei der Unterdrehzahl-Proportional-Integrations-Kompensationswert-Berechnungsschritt (201, 202, 203) Schritte umfaßt, um
einen Proportional-Kompensationswert Wp durch Multiplizieren einer Proportional-Verstärkungskonstanten Kp und des erfaßten Drehzahlfehlers We zu berechnen (201),
einen Integrations-Kompensationswert Wi durch Multiplizieren einer Integrations-Verstärkungskonstanten Ki, einer Schleifenzeit T und des Drehzahlfehlers We zu berechnen und den oben multiplizierten Wert mit einem Anfangsintegrationswert Wi zu addieren (202), und
den Proportional-Integrations-Kompensationswert Wpi durch Addieren des berechneten Proportional-Kompensationswerts Wp mit dem berechneten Integrations-Kompensationswert Wi zu berechnen (203).

11. Verfahren nach Anspruch 9, wobei der Überdrehzahl-Proportional-Integrations-Kompensationswert-Berechnungsschritt (204, 205, 206) die Schritte umfaßt, um
einen Proportional-Kompensationswert Wp durch Multiplizieren einer Proportional-Verstärkungskonstanten Kp und des erfaßten Drehzahlfehlers We zu berechnen (204),
einen Integrations-Kompensationswert Wi durch Multiplizieren einer Integrations-Verstärkungskonstanten Ki, einer Schleifenzeit T und des Drehzahlfehlers We zu berechnen und den oben multiplizierten Wert mit einem Anfangsintegrationswert Wi zu addieren (205), und
einen Proportional-Integrations-KompensationswertwpidurchAddieren des berechneten Proportional-Kompensationswerts Wp mit dem berechneten Integrations-Kompensationswert Wi zu berechnen (206).

12. Verfahren nach Anspruch 9, wobei der Winkelwert-Skalierungsschritt (210) umfaßt:
einen Unterdrehzahl-Winkelwert-Berechnungsschritt (211, 212, 213) zur Skalierung des Unterdrehzahl-Proportional-Integrations-Kompensationswerts in einen Winkelwert nach der Durchführung des Unterdrehzahl-Proportional-Integrations-Kompensationswert-Berechnungsschritts,
einen Überdrehzahl-Winkelwert-Berechnungsschritt (214, 215, 216) zur Skalierung des berechneten Überdrehzahl-Proportional-Integrations-Kompensationswerts in einen Winkelwert nach der Durchführung des Überdrehzahl-Proportional-Integrations-Kompensationswert-Berechnungsschritts.

13. Verfahren nach Anspruch 12, wobei der Unterdrehzahl-Winkelwert-Berechnungsschritt (211, 212, 213) die Schritte umfaßt, um die Soll-Drehzahl Wrm* durch Multiplizieren der Soll-Drehzahl Wrm* und π/180 in einen ersten Winkelwert α zu skalieren (211),
den Unterdrehzahl-Proportional-Integrations-Kompensationswert Wpi durch Multiplizieren des Unterdrehzahl-Proportional-Integrations-Kompensationswerts Wpi und π/180 in einen zweiten Winkelwert ΔW zu skalieren (212), und
einen Unterdrehzahl-Winkelwert α' durch Subtrahieren des zweiten Winkelwerts ΔW von dem ersten Winkelwert α zu berechnen (213).

14. Verfahren nach Anspruch 12, wobei der Überdrehzahl-Winkelwert-Berechnungsschritt (214, 215, 216) die Schritte umfaßt, um die Soll-Drehzahl Wrm* durch Multiplizieren der Soll-Drehzahl Wrm* und π/180 in einen ersten Winkelwert α zu skalieren (214),
den Überdrehzahl-Proportional-Integrations-Kompensationswert Wpi durch Multiplizieren des Überdrehzahl-Proportional-Integrations-Kompensationswerts Wpi und π/180 in einen zweiten Winkelwert ΔW zu skalieren (215), und
einen Überdrehzahl-Winkelwert α" durch Addieren des ersten Winkelwerts α und des zweiten Winkelwerts ΔW zu berechnen (216).

15. Verfahren nach Anspruch 13, wobei es bestimmt wird, daß die Drehzahl normal ist, wenn der Unterdrehzahl-Winkelwert α' kleiner als 0 oder größer als π ist.

16. Verfahren nach Anspruch 13, wobei es bestimmt wird, daß die Drehzahl normal ist, wenn der Überdrehzahl-Winkelwert α" kleiner als 0 oder größer als π ist.

## Revendications

1. Procédé pour commander la vitesse d'un moteur de machine à laver comprenant les étapes de :
détection (170) de la vitesse réelle pour détecter la vitesse réelle d'un moteur de machine à laver à chaque demi-cycle de fréquence d'alimentation pour une utilisation ordinaire ;
détection (180) d'une erreur de vitesse pour détecter une erreur de vitesse par comparaison de la vitesse réelle détectée à une vitesse commandée ;
détermination (190) d'une condition de vitesse pour déterminer une condition normale, une condition de vitesse trop faible ou une condition de vitesse excessive moyennant l'utilisation de l'erreur de vitesse détectée ;
calcul (200) de la valeur de compensation d'intégration proportionnelle pour calculer une valeur d'intégration proportionnelle en fonction de la condition de vitesse déterminée ;
mise à l'échelle d'une valeur angulaire (210) pour la mise à l'échelle d'une valeur angulaire de la valeur de compensation proportionnelle calculée ; et
commande (220) de la vitesse du moteur de machine à laver pour commander la vitesse du moteur de machine à laver en utilisant la valeur angulaire de mise à l'échelle.

2. Procédé selon la revendication 1, comprenant en outre une étape (100, 110, 120, 130, 140, 150, 160) de détermination de la vitesse commandée et de commande du moteur de machine à laver pour déterminer la vitesse commandée pour le moteur de machine à laver sur la base de la quantité de linge, et commander le moteur de machine à laver sur la base de la vitesse commandée déterminée.

3. Procédé selon la revendication 2, dans lequel l'étape de détermination de la vitesse commandée et de commande du moteur de la machine inclut les étapes de
détermination (100, 110, 120, 130, 140) de la vitesse commandée d'un moteur de machine à laver pour déterminer la vitesse commandée du moteur de machine à laver en fonction de la quantité de linge,
détection (150) d'une variation de la quantité de linge pour détecter une variation de la quantité de linge,
retour sur la variation de la quantité de linge pour exécuter l'étape de détermination de la vitesse (100, 110, 120, 130, 140) du moteur de machine à laver à nouveau dans le cas où la quantité de linge s'avère avoir changé en tant que résultat de l'étape exécutée (150) de détection de la variation de la quantité de linge, et
commande (160) d'un moteur de machine à laver pour commander le moteur de machine à laver à la vitesse commandée du moteur de machine à laver dans le cas où la quantité de linge s'avère inchangée en tant que résultat de l'exécution de l'étape (160) de détection d'une variation de la quantité de linge.

4. Procédé selon la revendication 3, dans lequel l'étape de détermination de la vitesse commandée du moteur de machine à laver inclut les étapes de
commande initiale (100) du moteur de machine à laver pendant un bref intervalle de temps préréglé pour détecter la quantité de linge,
détection (110) de l'intensité du courant circulant dans le moteur de machine à laver lors de l'exécution de l'étape initiale de commande du moteur de machine à laver,
détermination (120) de la quantité de charge par détermination de la quantité de linge avec un rapport de l'intensité du courant pour une charge de 100 % à l'intensité du courant détectée rapportée à une courbe caractéristique vitesse-couple du moteur de machine à laver,
détermination (130) de l'angle de phase du moteur de machine à laver par application d'une configuration d'angle de phase sur la base de la quantité de charge déterminée, et
détermination (140) de la vitesse commandée du moteur de machine à laver sur la base de l'angle de phase déterminé.

5. Procédé selon la revendication 1, dans lequel l'étape (170) de détection de la vitesse réelle inclut
une étape (171) d'entrée d'interruptions pour recevoir des interruptions produites conformément à chaque demi-cycle de fréquence d'alimentation pour une utilisation ordinaire,
une étape (172) de détection de flancs arrière pour détecter des flancs arrière d'impulsions rectangulaires correspondant à la rotation du moteur de machine à laver à partir de l'interruption reçue,
une étape (173) de détection d'impulsions rectangulaires pour détecter un cycle des impulsions rectangulaires par détection de l'intervalle de temps s'étendant depuis le flanc arrière détecté jusqu'au flanc arrière suivant, et
une étape (174) de détection de la vitesse réelle pour réaliser une mise à l'échelle de la vitesse réelle du moteur de machine à laver à partir du cycle détecté d'impulsion rectangulaire.

6. Procédé selon la revendication 5, dans lequel l'interruption se produit périodiquement toutes les 8,3 ms.

7. Procédé selon la revendication 1, dans lequel l'erreur de vitesse est l'écart de la vitesse réelle par rapport à la vitesse commandée lors de l'étape (180) de détection de l'erreur de vitesse.

8. Procédé selon la revendication 7, dans lequel, lors de l'étape (190) de détermination de la condition de vitesse, si l'erreur de vitesse est supérieure à une tolérance préréglée, il est établi que la vitesse est excessive, si l'erreur de vitesse est inférieure à la tolérance, il est établi que la vitesse est insuffisante, et si l'erreur de vitesse se situe dans les limites de la tolérance, il est établi que la vitesse est normale.

9. Procédé selon la revendication 1,
dans lequel l'étape de calcul (200) de la valeur de compensation d'intégration proportionnelle inclut
une étape (201, 202, 203) de calcul de la valeur de compensation d'intégration proportionnelle en cas de vitesse insuffisante pour calculer la valeur de compensation d'intégration proportionnelle en cas de vitesse insuffisante dans le cas où il s'avère que la vitesse est insuffisante en tant que résultat de l'étape exécutée de détermination de la condition de vitesse, et une étape (204, 205, 206) de calcul de la valeur de compensation d'intégration proportionnelle en cas de vitesse excessive pour calculer la valeur de compensation d'intégration proportionnelle en cas de vitesse excessive dans le cas où il est établi que la vitesse est excessive en tant que résultat de l'étape exécutée de détermination de la condition de vitesse.

10. Procédé selon la revendication 9,
dans lequel l'étape (201, 202, 203) de calcul de la valeur de compensation d'intégration proportionnelle en cas de vitesse insuffisante inclut des étapes pour
calculer une valeur de compensation proportionnelle Wp par multiplication d'une constante de gain proportionnelle Kp et de l'erreur de vitesse détectée We (201),
calculer une valeur de compensation d'intégration Wi par multiplication d'une constante de gain d'intégration Ki, d'une durée de boucle T et de l'erreur de vitesse We et addition de la valeur multipliée ci-dessus à une valeur initiale d'intégration Wi (202), et
calculer une valeur de compensation d'intégration proportionnelle Wpi par addition de la valeur de compensation proportionnelle calculée Wp à la valeur de compensation d'intégration calculée Wi (203).

11. Procédé selon la revendication 9,
dans lequel l'étape (204, 205, 206) de calcul de la valeur de compensation d'intégration proportionnelle en cas de vitesse excessive inclut des étapes pour
calculer une valeur de compensation proportionnelle Wp par multiplication d'une constante de gain proportionnelle Kp et de l'erreur de vitesse détectée We (204),
calculer une valeur de compensation d'intégration Wi par multiplication d'une constante de gain d'intégration Ki, d'une durée de boucle T et de l'erreur de vitesse We et addition de la valeur multipliée ci-dessus à une valeur initiale d'intégration Wi (205), et
calculer une valeur de compensation d'intégration proportionnelle Wpi par addition de la valeur de compensation proportionnelle calculée Wp à la valeur de compensation d'intégration calculée Wi (206).

12. Procédé selon la revendication 9,
dans lequel l'étape (210) de mise à l'échelle d'une valeur angulaire inclut
une étape (211, 212, 213) de calcul de la valeur angulaire en cas de vitesse insuffisante pour la mise à l'échelle d'une valeur angulaire de la valeur de compensation d'intégration proportionnelle en cas de vitesse insuffisante après exécution de l'étape de calcul de la valeur de compensation d'intégration proportionnelle en cas de vitesse insuffisante, et
une étape (214, 215, 216) de calcul de la valeur angulaire en cas de vitesse excessive pour la mise à l'échelle d'une valeur angulaire de la valeur de compensation d'intégration proportionnelle en cas de vitesse excessive après exécution de l'étape de calcul de la valeur de compensation d'intégration proportionnelle en cas de vitesse excessive.

13. Procédé selon la revendication 12,
dans lequel l'étape (211, 212, 213) de calcul de la valeur angulaire en cas de vitesse insuffisante inclut des étapes pour
mettre à l'échelle d'une première valeur angulaire α la vitesse commandée Wrm* par multiplication de la vitesse commandée Wrm* par π/180 (211),
mettre à l'échelle d'une seconde valeur angulaire ΔW la valeur de compensation d'intégration proportionnelle Wpi en cas de vitesse insuffisante par multiplication de la valeur de compensation d'intégration proportionnelle Wpi en cas de vitesse insuffisante par π/180 (212), et
calcul d'une valeur angulaire α' en cas de vitesse insuffisante par soustraction de la seconde valeur angulaire ΔW de la première valeur angulaire α (213).

14. Procédé selon la revendication 12, dans lequel l'étape (214, 215, 216) de calcul de la valeur angulaire en cas de vitesse excessive inclut des étapes pour
mettre la vitesse commandée Wrm* à l'échelle d'une première valeur angulaire α par multiplication de la vitesse commandée Wrm* par π/180 (214),
mettre à l'échelle d'une seconde valeur angulaire ΔW la valeur de compensation d'intégration proportionnelle Wpi en cas de vitesse excessive par multiplication de la valeur de compensation d'intégration proportionnelle Wpi en cas de vitesse excessive par π/180 (215), et
calcul d'une valeur angulaire α" en cas de vitesse excessive par addition de la première valeur angulaire α et de la seconde valeur angulaire ΔW (216).

15. Procédé selon la revendication 13, selon lequel, si la valeur angulaire α' en cas de vitesse insuffisante est inférieure à 0 ou supérieure à π, il est établi que la vitesse est normale.

16. Procédé selon la revendication 13, selon lequel, si la valeur angulaire α" en cas de vitesse excessive est inférieure à 0 ou supérieure à π, il est établi que la vitesse est normale.
